# EUROPEAN PATENT SPECIFICATION

(11) **EP 1 045 791 B1**
(45) Date of publication and mention of the grant of the patent: **11.05.2005**
(21) Application number: 99953857.2
(22) Date of filing: 15.10.1999
(51) Int. Cl.: B62K 3/14, B62K 15/00, B62K 13/02

(54) **MODULAR BICYCLE FOR ONE OR MORE PERSONS**
MODULARFAHRRADRAHMEN FÜR EINE ODER MEHRERE PERSONEN
BICYCLETTE MODULAIRE POUR UNE OU PLUSIEURS PERSONNES

(30) Priority: 16.10.1998 IT VI980199
(43) Date of publication of application: 25.10.2000
(73) Proprietor: Turcato, Gelsomino, 36063 Marostica (IT)
(72) Inventor: Turcato, Gelsomino, 36063 Marostica (IT)
(86) International application number: PCT/EP1999/007845
(87) International publication number: WO 2000/023317

(56) References cited:
- DD-A- 96 196
- FR-A- 839 571
- FR-A- 2 203 347
- FR-A- 2 422 545
- JP-A- 50 072 351
- JP-A- 60 252 082
- US-A- 3 608 917

## Description

This invention refers to a bicycle that can be divided into two parts and reassembled with additional frame elements so that it can also be used by two or more persons.

Document JP 50-07 2351 shows a bicycle according to the preamble of claim 1.

For years so-called tandem bicycles have been known, which can be used by two or more persons at the same time, since these bicycles are provided with a corresponding number of places with saddle and pedals so that each of the riders can give their personal contribution to the bicycle's traction.

Equally known are single-seater bicycles that have a frame fitted with a hinge enabling the actual frame to be folded in two parts so that its overall size is reduced, primarily to aid transport of the bicycle.

The aforementioned tandem-type bicycles are not usually foldable nor do they have a collapsible frame so that their overall size is reduced. The size of a tandem-type bicycle creates a great inconvenience for its user, since it is rare that this kind of bicycle can be transported in cars or campers and this is the reason why they do not have a very widespread use.

Another inconvenience against the popularity of tandem-type bicycles is that, since these bicycles cannot be modified, they can only be used to an advantage by persons that the tandem is capable of carrying at any one time. For this reason they do not have widespread interest since the chance of using them at the same time by several persons during the year is relatively rare.

The scope of this invention is to overcome the aforementioned inconveniences.

A first scope set by the invention is to produce a bicycle whose frame is easily divided in two or more parts and reassembled back together.

Another scope set by the invention is to produce a bicycle whose frame can be mounted with added frame elements so that a normal bicycle can be readily transformed into a tandem-type two or more seater bicycle.

Another scope that the invention intends to achieve is to be able to complete the transformation operations of the bicycle or division of the parts in a quick and easy manner.

Another scope that is intended to achieve is to produce a modular bicycle in one or more parts of frame that has a low cost.

Last but not least a scope is to produce a bicycle with the aforementioned characteristics that allows easy maintenance.

All the aforementioned scopes and others that shall be better explained later are achieved by a bicycle. according to claim 1.

One advantage of the invention is that the bicycle, in addition to being collapsible into two parts, can be connected to at least another frame element that is compatible and can be coupled with the first and second parts of the bicycle.

Additional characteristics and details of the invention shall be better explained in the description that follows and in the execution examples given as a guideline but not a limitation and illustrated in the attached diagrams, where:
- fig. 1 illustrates the bicycle invention divided into two parts;
- fig. 2 illustrates the bicycle in fig. 1 with its two parts joined together;
- fig. 3 illustrates the bicycle invention with an additional frame element before assembly;
- fig. 4 shows the bicycle in fig. 3 when assembled;
- fig. 5 shows a first form of execution of the first and second parts of frame of the bicycle invention;
- fig. 6 shows the first and second parts of frame in fig. 5 joined together;
- fig. 7 and fig. 8 show details of connecting the brake cable in the bicycle invention;
- fig. 9 shows one of the union devices of the frame illustrated in fig. 5;
- fig. 10 shows the union device in fig. 9 when assembled;
- fig. 11 shows a two-seater tandem of the frame invention according to the means of connection in fig. 5;
- fig. 12 shows the tandem frame in fig. 11 when assembled;
- fig. 13 shows a three-seater tandem of the frame invention according to the means of connection in fig. 5;
- fig. 14 shows the frame in fig. 13 when assembled;
- fig. 15 shows a first variant in execution of the union devices between the first and second parts of frame of a bicycle ;
- fig. 16 shows the two parts of frame in fig. 15 when assembled;
- fig. 17 shows a two-seater tandem frame according to the variant in fig. 15;
- fig. 18 shows the frame in fig. 17 when assembled;
- fig. 19 shows another variant in execution of the union devices of the frame of a bicycle;
- fig. 20 shows the frame in fig. 19 when assembled;
- fig. 21 shows a frame in a tandem execution according to the variant in fig. 19;
- fig. 22 shows the frame in fig. 21 when assembled;
- fig. 23 shows another variant in execution to the frame shown in fig. 19;
- fig. 24 shows a tandem frame according to the variant in fig. 21;
- fig. 25 shows another variant in execution to the frame in fig.'s 19 and 23;
- fig. 26 shows a tandem frame according to the variant in fig. 25;
- fig. 27 shows the first and second parts of frame with another variant in execution of the union devices;
- fig. 28 shows the two parts in fig. 27 when assembled;
- fig. 29 and fig. 30 show details of the union devices used by the two parts of frame in fig. 27.

With reference to fig.'s 1, 2 and 5, it can be seen that the bicycle invention generally indicated by 1 is made up of a frame divided into two parts, which create a back section indicated by 2 and a front section indicated by 3. The back section includes a saddle tube 21, a saddle 22, a top saddle fork 23 and a bottom chain fork 24.

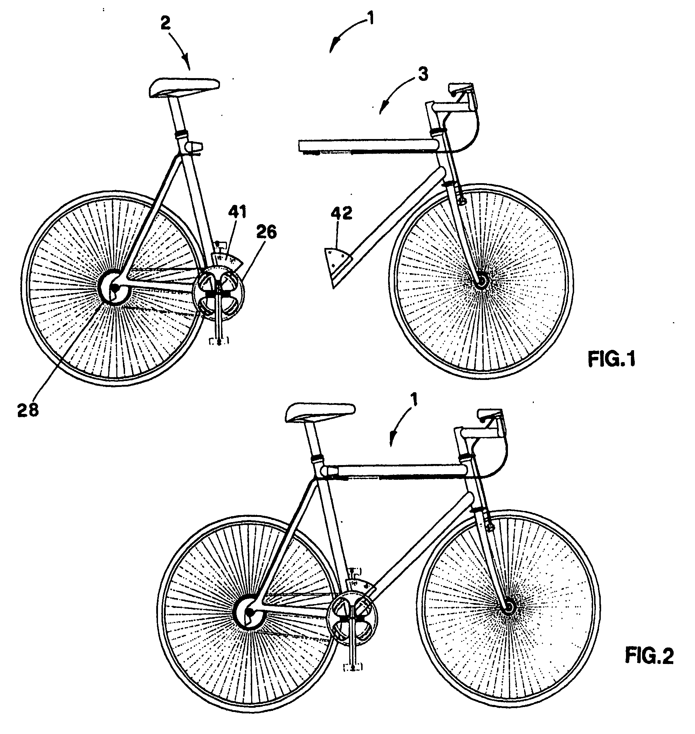

Where the saddle tube and bottom chain fork meet there is a hole 25 that holds the crankset 26 (fig. 1), while where the bottom chain and top saddle forks meet there is a bracket 27 that holds the back freewheel hub 28.

With regard to the front part 3, this includes the steering head tube 31, the front fork 32 and the crossbar 33 connecting with the back section and the angled down tube 34.

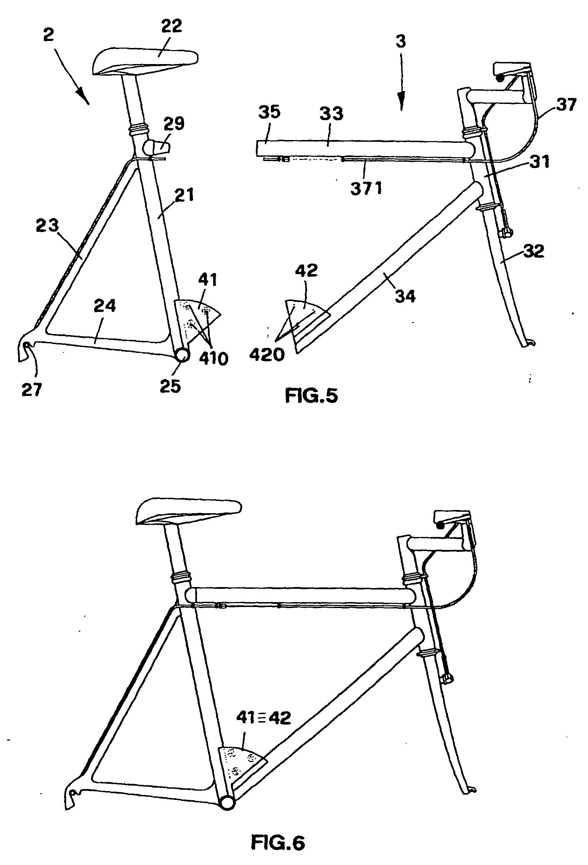

In the case of the example in fig. 5 the union devices between the part 2 and part 3 of the frame consist of a pair of flat flanges 41 and 42, where the first flange 41 is set on the saddle tube at the point where said saddle tube 21 and the back fork 24 meet.

The second flange 42 is instead set on the open end of the down tube 34 belonging to the second part 2 of the frame.

Flanges 41 and 42 are provided with holes and in the case of the example in fig. 5 each has three holes indicated by 410 and 420 respectively. The two flanges are therefore coupled together by overlapping and locking them by means of three screws that engage in their corresponding holes as can be seen in fig. 6.

According to the execution in fig. 5 the two parts 2 and 3 of the bicycle's frame also have an additional union device that consists of a tapered male fitting 29 that fits into a corresponding tapered socket 35 inserted in the crossbar 33. The coupling between the male element and female element 35 is obtained by means of a pair of screws 36 as shown in fig.'s 9 and 10.

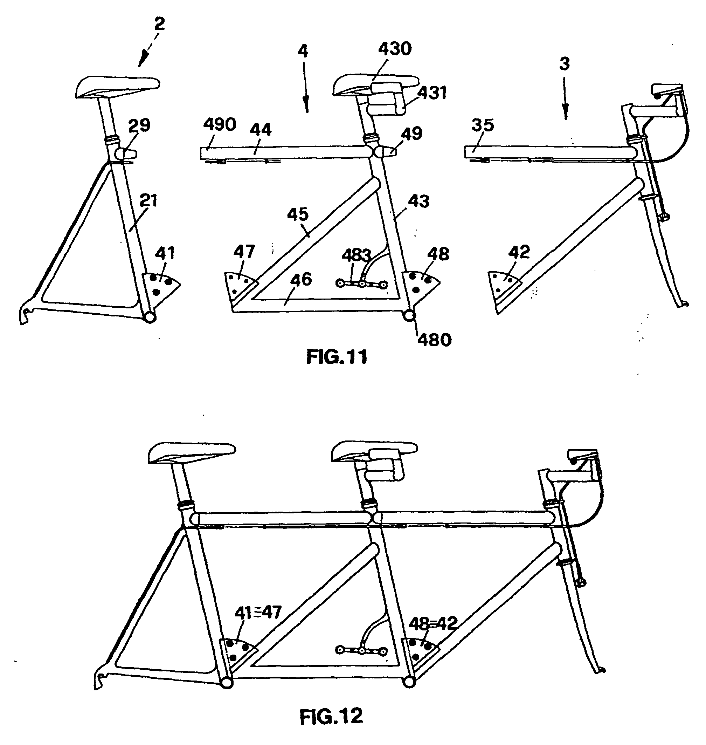

Fig. 11 shows how the frame in fig. 5, divided into parts 2 and 3 can receive another frame element 4 to produce a tandem-type bicycle. Said additional frame element has a saddle tube 43, which has fixed handlebars 431 and a saddle 430. The saddle tube is connected to a top crossbar 44, a down tube 45 and a bottom crossbar 46 that meets with the bottom of the down tube 45. Where the bottom crossbar 46 and down tube 45 meet there is a flange 47 and, where the saddle tube 43 and bottom crossbar 46 meet there is another flange 48. Both these flanges have holes.

To produce the tandem frame, the flange 47 is coupled to flange 41 and the flange 48 is coupled to flange 42. The male fitting 49 found on the additional frame element 4 and a socket 490 inserted in the top crossbar 44 complete the assembly. The male fitting 49 connects, by means of screws, with the socket 35 belonging to part 3 of the frame, while the socket 490 connects with the male 29 belonging to part 2 of the frame in fig. 11.

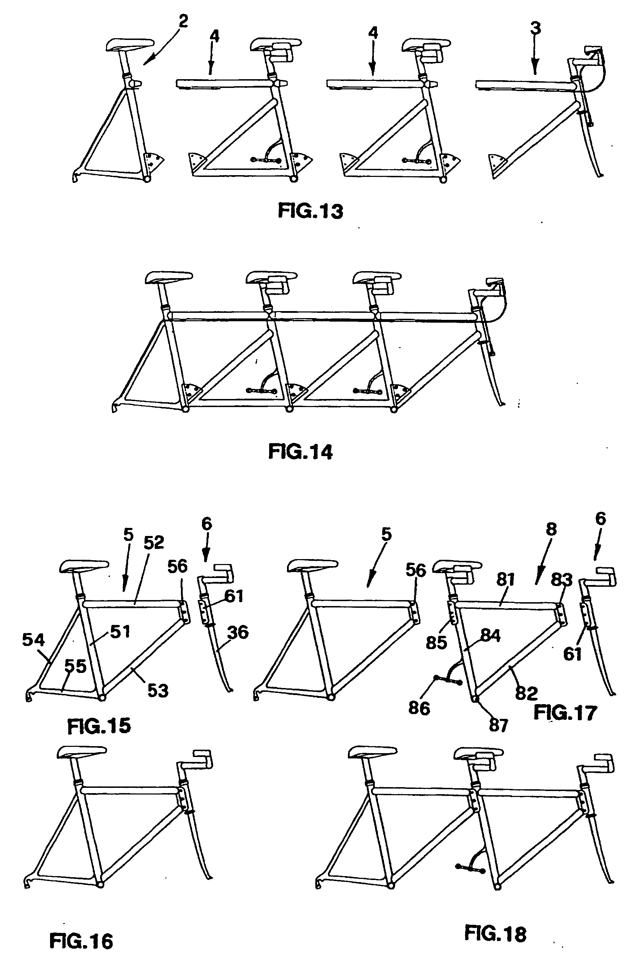

Fig. 12 shows the frame in fig. 11 reassembled by means of the aforementioned connecting devices.

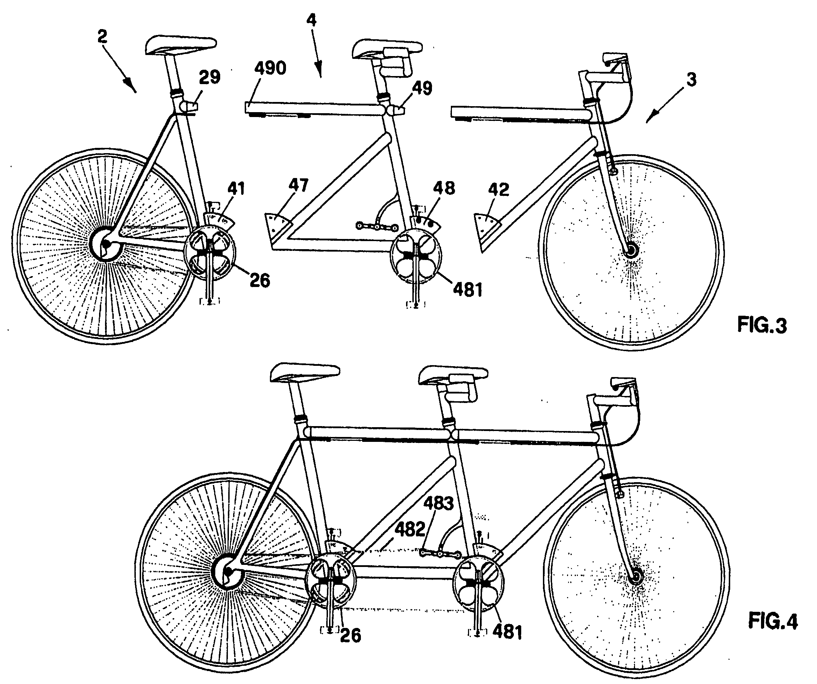

Since an additional crankset, indicated by 481, is mounted in the tube 480, an additional chain 482 is required to connect the crankset 481 with crankset 26, as seen in fig. 4. For the chain 482 to operate well a chain take-up has to be used that is indicated in fig. 11 and fig. 4 by 483.

With regard to the back brake, it can be seen in fig. 5 that there is a break in the cable 37 to enable the detachment of the first part 2 and second part 3 of the frame. This is necessary for dividing the bicycle into two pieces, as can be seen in fig. 1, and for transforming the bicycle in fig. 2 into a tandem as can be seen in fig.'s 3 and 4.

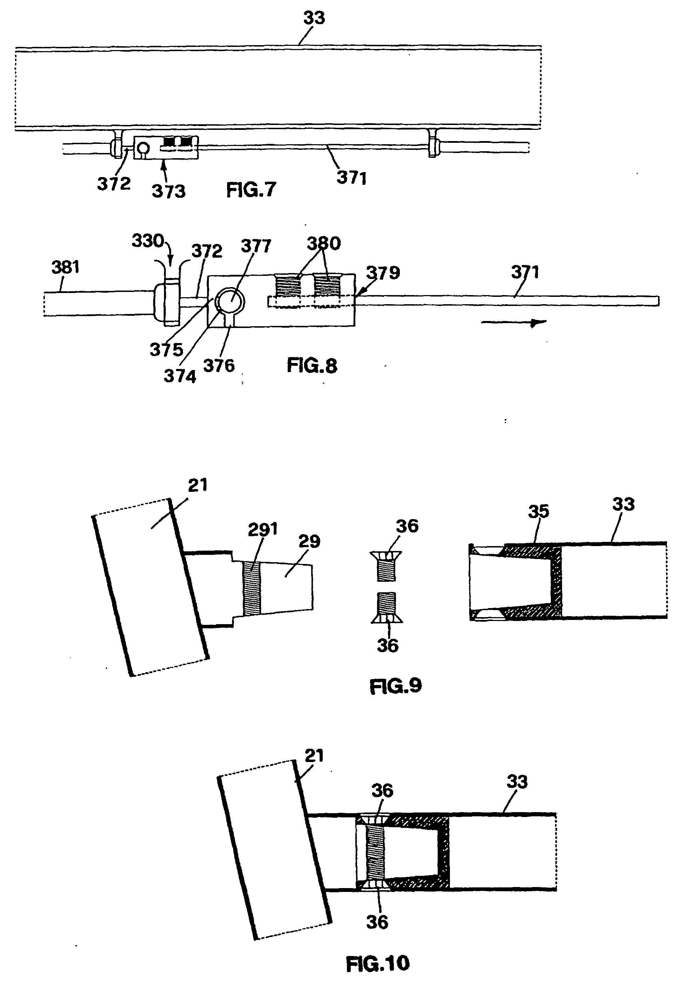

To be able to achieve a very quick, reliable union between the two sections of steel cable 371 and 372 in fig. 5, or in similar situations, as can be seen in fig. 11, concerning the tandem configuration, the invention uses a junction device, shown in fig. 7 and 8 and consisting of a block 373 attached, in the case of the bicycle in fig. 1 and its relative frame in fig. 5 to the crossbar 33, and in the case of the frame of the bicycle in fig. 11 also to crossbar 44.

The block 373 has a hole 374 having two entry slots 375 and 376. This hole receives the end nipple 377 of the section 372 of steel cable 37.

The other free end of the steel cable 37 indicated by 371 fits into a hole 379 made lengthways in the block 373. The free end 378 is then locked by two grub-screws 380 set perpendicular to the hole 379.

When the back brake is pulled in the direction of the arrow in fig. 8, the cable 37 draws the block 373 forwards and consequently also the nipple 377 on the other section of cable 37 connected to the brake and whose outer casing 381 is clasped against the brace 330 attached to the crossbar 33 in the case in fig. 7 and fig. 5, or to the crossbar 44 in the case of the section related to the additional frame element 4 shown in fig. 11.

Fig. 13 and fig. 14 show a three-seater tandem that is produced using part 1 and part two of the standard bicycle and two additional frame elements 4 that are identical to one another.

It can be understood how easy it is to transform the bicycle invention from a one-seater into a tandem or a two or more seater bicycle depending on the user's needs.

Fig. 15 shows a first variant of the union devices between the first and second parts of a frame indicated by 5 and 6 respectively.

The first part of the frame 5 has the saddle tube 51, the crossbar 52, down tube 53, top saddle fork 54 and bottom chain fork 55.

Where the crossbar 52 and down tube 53 meet there is a flange 56 that has an L-shaped profile and has three holes in the part not welded to tubes 52 and 53.

In the same way, part 6 of the frame has another flange 62, also L-shaped and welded so that it juts out from the steering head tube 61 and is joined to flange 56 by means of their corresponding holes.

The second part of the frame 6 has the fork 63 and steering head 64.

Even in this case, as can be seen in fig. 16, by simply placing flanges 56 and 61 together and locking them by means of engaging screws, regardless of whether on flange 56 or 61, or even by means of bolts, allows two parts 5 and 6 of the frame to be joined forming a single bicycle.

In the event that, as can be seen in fig. 17, the bicycle has to be changed from a frame like the one in fig.'s 15 and 16 into a two-seater tandem, it is sufficient to detach the two parts 5 and 6 and add another frame element 8 that can be seen in fig. 17.

This frame element 8 has another crossbar 81, a down tube 82 that is joined to the crossbar by means of the L-shaped flange with holes on one side 83 and a saddle tube 84 connected to the tubes 81 and 82.

Next to the bracket between the saddle tube 84 and the crossbar 81 there is an additional L-shaped flange indicated by 85 suited to be coupled to flange 56 by means of known union devices. In the same way the flange 83 connects with the second flange 61 of the second part 6.

The additional frame element 8 also has the chain take-up device 86 necessary to tension the chain due to the existence of another crankset fitted in the hole 87.

Even in this case the passage from a single-seater frame, as in fig. 15, to a two-seater frame as shown in fig. 17 merely involves the unscrewing of three screws to detach the flanges 56 and 61, fit the additional frame element 8 between part 5 and part 6 and then couple the flange 56 to flange 85 and the flange 83 to flange 61.

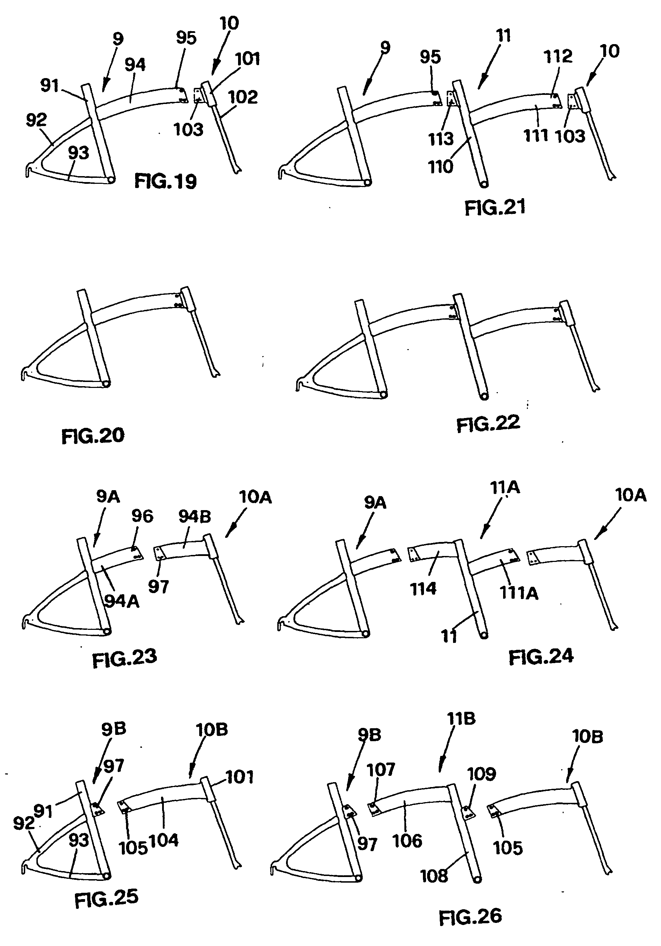

Figures 19, 23 and 25 show a different type of frame where the first part 9 and second part 10 are joined together by a single pair of flat flanges.

In fig. 19 it can be seen that the first part of frame is made up of the saddle tube 91, the top saddle fork 92 and the bottom chain fork 93 and by the crossbar 94 that connects the first part of frame 9 to the second part 10. The second part of frame 10 is made up of the steering head tube 101 and the fork 102. It is clear that the steering head and handlebars are fitted in the head tube 101. The connection between the first part 9 and second part 10 of the frame in fig. 19 is made by means of flange 95, belonging to the part of frame 9 that is coupled to flange 103 belonging to the part of frame 10. The flange 95 is obtained by flattening or modelling the crossbar 94.

Fig. 21 shows the frame adapted to produce a tandem with the additional frame element 11 inserted between the first part 9 of the frame and the second part 10. The frame 11 in this case is made up of a saddle tube 110 and an additional crossbar 111 holding the flange 112. There is another flange 113 on the back of the saddle tube 110 and set so that it connects with the flange 95 belonging to part 9 of the frame. Even in this case the transformation of the frame from a one-seater bicycle frame to a two seater tandem as in fig.'s 20 and 22, is extremely simple, again by merely having to couple the parts together by means of screws or bolts.

Fig. 23 shows a variant in execution of the frame in fig. 19 where the crossbar 94 is now divided into two sections 94a and 94b where flanges 96 and 97 have been made in their ends. As a result even the additional element 11, now indicated by 11a, has to be varied in the sense that the crossbar 111 is shortened becoming 111a, while the flange 113 now belongs to the section of tube indicated by 114.

Another variant to fig. 19, shown in fig. 25, has the first part 9b of the frame consisting exclusively of the saddle tube 91 and the top fork 92 and bottom fork 93 while the crossbar, indicated by 104, belongs to the second part 10b of the frame and is welded to the steering head tube 101. Naturally, the tandem execution of this frame, shown in fig. 26, shows the additional frame element 11b fitted with a tube 106 having a flange 107 connected to the steering head tube 108 which also holds another flange 109. The coupling between flanges 97 and 107 and between flanges 109 and 105 allows the two-seater tandem frame to be obtained. By using several frame elements 11b a tandem can be obtained for several riders.

In fig.'s 27 and 28, the pair of flanges that produce the union between part 2 and part 3 of the frame, together with the male-female fitting 29 and 35, consists of a flange 61 set on the bottom end of the saddle tube 21 having a groove 62 provided with three holes 63, and a corresponding flange 64 having a tongue 65 compatible with the groove 62 and also provided with holes 66. This flange 64 is attached to a bracket 341 belonging to the down tube 34 of the second part of the frame 3. In this way, when coupled, it is facing and parallel with the flange 61 making it compatible with the geometry of the frame. The screws passing through holes 66 and engaging in holes 63, thereby lock part 3 onto part 2, together with the additional coupling made by means of the screws 36 on the male-female fitting 29-35.

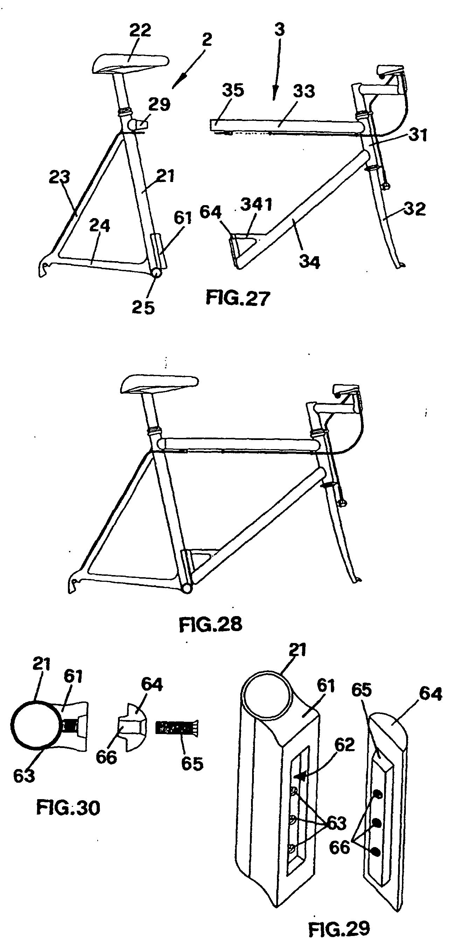

In fig. 30 a cross-section of the pair of flanges 61 and 64 can be seen, with the screws 37 that pass through hole 66 and screw into the threaded hole 63 of the flange 61.

The different solutions explained herein have shown how all the scopes set for the invention are achieved, which can substantially be summarised in being able to produce a bicycle whose frame can be detached in two parts and that between these two parts, one or more additional frame elements can be added to transform the one-seater bicycle into a two or more seater tandem bicycle.

It is clear that if the need should not arise to transform the single-seater bicycle into a tandem bicycle, an advantage nevertheless remains in having a bicycle that can be divided into two parts without having to carry out complex operations, and this being entirely to the advantage being able to transport the bicycle to any place and with any vehicle.

## Claims

1. Bicycle (1) including a frame divisible into two parts comprising a back section (2) having at least a saddle tube (21), a saddle (22), a top back saddle fork (23), a bottom back chain fork (24), a flat flange (41) with holes (410), and a front section (3) having a steering head tube (31), a front fork (32), a top crossbar (33), an angled down tube (34), a flat flange (42) with holes (420), said frame holding:
- a front wheel with steering by means of handlebar;
- a back wheel;
- a tubular hole that holds the crankset;
- a traction device with at least a chain connecting kinetically at least a back sprocket with a crankset having pedal cranks and pedals;
- a brake for each wheel actuated from the handlebar , a connecting device of the brake cables,
**characterized in that**:
said back section (2) further comprises a tapered male fitting (29) with at least a hole and said front section (3) further comprises a tapered socket (35) with at least a hole;
said flange (41) belonging to the back section (2) is set on said saddle tube (21) in a longitudinal way with regard to said frame where said saddle tube (21) and said bottom back chain fork (24) meet and said flange (41) belonging to the front section (3) is set in a longitudinal way with regard to said frame on the open end of said angled down tube (34);
said tapered male fitting belonging to the back section is set in a longitudinal way with the conic section directed towards the front section of said frame, where said saddle tube and said top back saddle fork meet and said tapered socket belonging to the front section is set in the open end of said top crossbar;
said flanges (41, 42), said tapered male fitting (29) and said tapered socket (35) being coupled by overlapping and made integral by means of screw (36) and bolts.

2. Bicycle according to claim 1 including between said back section (2) and said front section (3) of said frame, an additional frame element (4) having at least a saddle tube (43), a saddle (430), a top crossbar (44), an angled down tube (45), a first flat flange (47) with holes, a tapered socket (490) with at least a hole, a second flat flange (48) with holes, a tapered male fitting (49) with at least a hole, said additional frame element holding:
- a fixed handlebar (431);
- an additional tubular hole with the hub of an additional crankset:
- an additional traction device with at least an additional chain that kinetically connects the wheel of the additional crankset to the crankset of said back section of said frame having pedal cranks and pedals;
- a chain tensioner;
- an additional connecting device of the brake cables;
said additional frame element is **characterized in that**
said first flange (47) is set on said angled down tube (45) in a longitudinal way with regard to said additional frame element where said angled down tube (45) and said bottom crossbar (46) meet, that said tapered socket is set in the open end of said top crossbar of said additional frame element, that said second flange (48) is set on said saddle tube (43) in a longitudinal way with regard to said additional frame element where said saddle tube (43) and said bottom crossbar (46) meet, that said tapered male fitting is set in a longitudinal way with regard to said additional frame element, with the conic section directed towards the front section of said frame where said saddle tube, said top crossbar and said angled down tube meet; said first flange (47), said tapered socket (490), said second flange (48) and said tapered male (49) fitting being coupled by overlapping and made integral by means of screws and bolts respectively with the back section (2) and the front section (3) of said frame forming a tandem - type bicycle.

## Patentansprüche

1. In zwei Teile trennbarer Rahmen eines Fahrrads (1) bestehend aus:
einem **Hinterteil (2),** grundsätzlich ausgestattet mit:
- einem Sattel (22)
- einem Sattelstützrohr (21)
- einer oberen Hinterradgabel (23)
- einer unteren Hinterradgabel (24)
- einem gelochten (410) Flachflansch (41)
- einer mindestens einmal gelochten Kegelkupplung (29)
einem **Vorderteil (3),** grundsätzlich ausgestattet mit:
- einem Fahrradienkerrohr (31)
- einer Vorderradgabel (32)
- einem Oberrohr (33)
- einem unteren diagonalen Stützrohr (34)
- einem gelochten (420) Flachflansch (42)
- einer mindestens einmal gelochten Kegelhülse (35)
Obengenannter Fahrradrahmen unterstützt:
- ein durch den Fahrradlenker gesteuertes Vorderrad
- ein Hinterrad
- ein Rohrloch mit der Antriebsradnabe
- eine Zugvorrichtung mit mindestens einer Kette, die kinematisch mindestens ein hinteres Kettenzahnrad und ein Antriebsrad mit Tretkurbel und Pedalen verbindet
- pro Rad je eine über den Fahrradlenker betätigte Bremse
- eine Verbindungsvorrichtung für Bremskabel
**Merkmale**
Erwähnter Hinterteil (2) besteht aus erwähntem Flansch (41), welcher longitudinal am erwähnten Sattelstützrohr (21) des erwähnten Fahrradrahmens liegt, entsprechend der Konvergenz zwischen erwähntem Sattelstützrohr und erwähnter oberer Hinterradgabel (24).
Erwähnter Vorderteil gehörender Flachflansch, liegt longitudinal am freien Endstück des erwähnten unteren diagonalen Stützrohrs (34) am erwähnten Fahrradrahmen.
Erwähnte zum Hinterteil gehörende gelochte Kegelkupplung, liegt longitudinal, mit dem zur Vorderseite des erwähnten Fahrradrahmens gewendeten konischen Teil, entsprechend der Konvergenz zwischen erwähntem Sattelstützrohr und erwähnter oberer Hinterradgabel.
Erwähnte zum Vorderteil gehörende gelochte Kegelhülse wird im freien Teil des erwähnten oberen horizontalen Stützrohrs eingefügt.
Erwähnte Flansche (41-42), erwähnte Kegelkupplung (29) und erwähnte Kegelhülse (35) werden aufeinander passend mittels Muttern und Schrauben (36)befestigt.

2. Fahrrad gemäss Patentanspruch mit zusätzlichem Fahrradrahmen-Modul (4) als Bindeglied, zwischen erwähntem Vorderteil (3) und erwähntem Hinterteil (2) des Fahrradrahmens.
Zusätzliches Fahrradrahmen-Modul grundsätzlich ausgestattet mit:
- einem Sattel (430)
- einem Sattelstützrohr (43)
- einem oberen horizontalen Stützrohr (44)
- einem unteren diagonalen Stützrohr (45)
- einem unteren horizontalen Stützrohr
- einem ersten gelochten Flachflansch (47)
- einer mindestens einmal gelochten Kegelhülse (490)
- einem zweiten gelochten Flachflansch (48)
- einer mindestens einmal gelochten Kegelkupplung (49)
Obengenanntes zusätzliches Fahrradrahmen-Modul unterstützt:
- ein unbeweglicher Fahrradlenker (431)
- ein zusätzliches Rohrloch mit einer zusätzlichen Antriebsradnabe
- eine zusätzliche Zugvorrichtung mit mindestens einer zusätzlichen Kette, die kinematisch das Zahnrad des zusätzlichen Antriebsrades mit Tretkurbeln und Pedalen und das Antriebsrad des erwähnten Hinterteils des erwähnten Fahrradrahmens verbindet
- eine Kettenspannvorrichtung
- eine zusätzliche Verbindungsvorrichtung für Bremskabel
**Merkmale des zusätzlichen Fahrradrahmen-Moduls**
Erwähnter erster Flachflansch (47) liegt longitudinal, am erwähnten unteren diagonalen Stützrohr (45) des erwähnten zusätzlichen Fahrradrahmen-Moduls, entsprechend der Konvergenz zwischen erwähntem unterem diagonalen Stützrohr (45) und erwähntem unteren horizontalen Stützrohr (46).
Erwähnte gelochte Kegelhülse wird im erwähnten freien Teil des erwähnten oberen horizontalen Stützrohrs des erwähnten zusätzlichen Fahrradrahmen-Moduls eingefügt. Erwähnter zweiter Flachflansch(48) liegt longitudinal am erwähnten Sattelstützrohr (43) des erwähnten zusätzlichen Fahrradrahmen-Moduls, entsprechend der Konvergenz zwischen erwähntem Sattelstützrohr (43) und erwähntem unterem horizontalen Stützrohr (46).
Erwähnte gelochte Kegelkupplung, liegt longitudinal, mit dem zur Vorderseite des erwähnten Fahrradrahmens gewendeten konischen Teil, am erwähnten zusätzlichen Fahrradrahmen-Modul, entsprechend der Konvergenz zwischen erwähntem Sattelstützrohr, erwähntem oberem horizontalen Stützrohr und erwähntem unterem diagonalen Stützrohr.
Erwähnter erster Flachflansch (47), erwähnte Kegelhülse (490), erwähnter zweiter Flachflansch (48) und erwähnte Kegelkupplung (49) werden aufeinander passend mittels Muttern und Schrauben befestigt, respektiv mit dem Vorderteil (3) und dem Hinterteil (2) des erwähnten Fahrradrahmens so verbunden, dass dadurch ein Fahrrad Typ Tandem entsteht.

## Revendications

1. Bicyclette (1) composé d'un cadre divisible en deux parties, étant formé d'une arrière (2) ayant au moins un tube appui-selle (21), une selle (22), une fourche derrière dessus (23), une fourche derrière (24) en bas, une bride plane (41) avec des trous, un embrayage mâle conique (29) avec au moins un trou et un partie avant (3) ayant au moins un tube (31) du guidon, une fourche avant (32), un tube horizontal (33) dessus, un tube incliné (34) en bas, une bride plane (42) avec des trous (420), une douille conique (35) avec au moins un trou .
Dit cadre supporte :
- une roue avant tournante au moyen du guidon,
- une roue derrière,
- un trou tubulaire qui maintiens le moyeu de roue d'entrainement,
- un dispositif de traction avec au moins une chaîne qui raccorde cinétiquement au moins un rochet derrière avec une roue d'entrainement complète de manivelles et pèdales,
- un frein pour chaque roue commandé par le guidon,
- un dispositif de raccordement des cables des freins.
**CARACTERISTIQUES:** dite bride (41) appartenante à l'arrière (2) est placée sur dit tube appui-selle (21) d'une façon longitudinale par rapport à dit cadre en correspondance avec la convergence entre dit tube appui-selle (21) et dite fourche derrière (24) en bas ; dite bride (41) appartenante à la partie avant (3) est placée d'une façon longitudinale par rapport a dit cadre sur la partie finale ouverte de dit tube incliné (34) en bas ; dit embrayage mâle conique appartenant à l'arrière est placé d'une façon longitudinale, avec la part conique dirigée contre la partie avant de dit cadre, en correspondance avec la convergence de dit tube appui-selle et de dite fourche derrière dessus ; dite douille conique appartenante à la partie avant est insérée dans la partie ouverte de dit tube horizontal dessus ; dites brides (41-42), dit embrayage mâle conique (29), dit douille conique (35) sont entre eux accoupables et serrés par des vis (36) et des boulons.

2. Bicyclette selon la revendication comprennante entre la dite arrière (2) et la dite partie avant (3) un autre élément de cadre (4) ayant au moins un tube appui-selle (43), un selle (430), un tube horizontal (44) dessus, un tube incliné (45) en bas, une première bride plane (47) avec des trous, un embrayage mâle conique (490) avec un trou au moins, une deuxième bride plane (48) avec des trous, une douille conique (49) avec un trou au moins .
Dit ultérieur élément de cadre supporte :
- une guidon fix, (431)
- un ultérieur trou tubulaire maintenant le moyeu d'une roue d'entrainement ultérieure,
- un dispositif de traction ultérieur avec au moins une chaîne ultérieure qui raccorde cinétiquement la roue de l'ultérieure roue d'entrainement avec la roue d'entraînement de l'arrière de dit cadre complète de manivelles et de pédales,
- un tendeur de chaine
- un dispositif ultérieur de raccordement des câbles des freins.
**Dit élément de cadre ultérieur est caractérisé comme suite :** dite première bride (47) est placée sur dit tube incliné (45) en bas d'une façon longitudinale par rapport à dit élément de cadre ultérieur, en correspondance avec la convergence de dit tube incliné (45) en bas et de dit tube horizontal (46) en bas ; dite douille conique est insérée dans la part ouverte de dit tube horizontal dessus de dit élément de cadre ultérieur ; dite deuxième bride (48) est placée sur dit tube appui-selle (43) d'une façon longitudinale par rapport à dit élément de cadre ultérieur, en correspondance avec la convergence de dit tube appui-selle (43) et de dit tube horizontal (46) en bas ; dit embrayage mâle conique est placé d'une façon longitudinale par rapport à dit élément de cadre ultérieur, avec la part conique dirigée contre la partie avant de dit cadre, en correspondance avec la convergence de dit tube appui-selle, de dit tube horizontal dessus et de dit tube incliné en bas. Dite première bride (47), dite douille conique (490), dite deuxième bride (48)et dit embrayage mâle conique (49) sont entre eux accoupables et fermès au moyen des vis et des boulons respectivement soit avec l'arrière (2) et soit avec la partie avant (3) en formant de cette façon une bicyclette type tandem.
